(19) Europäisches Patentamt
European Patent Office
Office européen des brevets

(11) **EP 2 026 397 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(51) Int Cl.:
***H01M 8/04*** *(2006.01)*

(21) Anmeldenummer: **08012667.5**

(22) Anmeldetag: **14.07.2008**

(54) **Vorrichtungen zur Wärmenutzung bei Brennstoffzellen**

Device for creating heat in fuel cells

Dispositifs d'utilisation de la chaleur avec des cellules combustibles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.07.2007 AT 11802007**

(43) Veröffentlichungstag der Anmeldung:
**18.02.2009 Patentblatt 2009/08**

(73) Patentinhaber: **Vaillant GmbH**
**42859 Remscheid (DE)**

(72) Erfinder:
• **Badenhop, Thomas**
**51688 Wipperfürth (DE)**
• **Berg, Joachim**
**42859 Remscheid (DE)**

• **Götz, Klaus**
**42653 Solingen (DE)**
• **Kohlhage, Jörg**
**45329 Essen (DE)**
• **Kraus, Matthias**
**42929 Wermelskirchen (DE)**
• **Oerder, Bodo**
**42897 Remscheid (DE)**
• **Paulus, Jochen**
**42655 Solingen (DE)**

(74) Vertreter: **Hocker, Thomas**
**Vaillant GmbH**
**Berghauser Strasse 40**
**42859 Remscheid (DE)**

(56) Entgegenhaltungen:
**WO-A-98/04011          WO-A-2004/021495**
**WO-A-2007/073387      US-A1- 2005 069 741**

## Beschreibung

Die Erfindung bezieht sich auf eine Vorrichtung zur Wärmenutzung bei Brennstoffzellen.

Bei Brennstoffzellen reagiert in der Regel Wasserstoff mit Sauerstoff in einer elektrochemischen Reaktion und erzeugt dabei Wasserdampf und elektrische Energie. Bei Festoxidbrennstoffzellen (Solide Oxide Fuel Cell, SOFC) reagieren an der Anode Sauerstoff mit Wasserstoff zu Wasserdampf. Dagegen ist die Kathode lediglich sauerstoff- oder luftführend. Festoxidbrennstoffzellen arbeiten zumeist bei Temperaturen um 900°C bei hohem Luftüberschuss (λ > 2). Gemäß Stand der Technik werden das Anodenabgas und die Kathodenabluft zusammengeführt und gemeinsam abgekühlt. Da mit steigendem Luftanteil der Taupunkt fällt (vgl. Mollier-Diagramm), kann bei SOFC-Brennstoffzellen die Kondensationswärme des Abgases kaum genutzt werden.

Je nach Brennstoffzellentyp findet die Wasserdampfbildung an der Anode oder Kathode bei unterschiedlichen Temperaturen statt. Auch der Luftüberschuss variiert je nach Brennstoffzellentyp sehr stark. Allen Brennstoffzellen ist gemein, dass die Wasserdampfbildung an einer Elektrode stattfindet.

Aus US 2005/069741 A1 ist einen Brennstoffzellenanlage bekannt, bei der die Anoden- und Kathodenabgasleitung einer PEMFC-Brennstoffzelle von einander getrennt in zwei flüssigkeitsdurchströmten Wärmetauschern abgekühlt werden. Das kühlende Fluid kühlt zunächst das trockene Anodenabgas und dann das feuchte Kathodenabgas. Ein weiteres Ausführungsbeispiel zeigt einen Wärmetauscher für 3 Fluide, wobei ein Kühlmedium entweder das Anoden- oder Kathodenabgas kühlt.

Der Erfindung liegt die Aufgabe zugrunde, die Nutzung der im Abgas von Brennstoffzellen enthaltenen Energie zu erhöhen.

Erfindungsgemäß wird dies gemäß den Merkmalen des unabhängigen Anspruchs 1 dadurch gelöst, dass bei einer Brennstoffzelle mit Anodenabgasleitung und Kathodenabgasleitung diese in zwei separate einen Warmwasserspeicher durchdringende Wärmeaustauscher geleitet werden. Hierdurch wird erreicht, dass das wasserdampfführende Abgas über einen geringen Luftanteil verfügt und somit der Taupunkt hoch ist, wodurch schon bei verhältnismäßig hohen Temperaturen die Kondensation einsetzt. Die Abgase eines Zusatzheizgerätes werden durch einen dritten separaten, den Warmwasserspeicher durchdringende Wärmeaustauscher geleitet, um weitere Wärme auf den Warmwasserspeicher zu übertragen.

Vorteilhafte Ausgestaltungen der Erfindung ergeben sich durch die Merkmale der unabhängigen Ansprüche.

So kann das Abgas des Zusatzheizgerätes auch in den Wärmeaustauscher des wasserdampfführenden Abgases geleitet werden.

Besonders vorteilhaft ist es, wenn die den Warmwasserspeicher durchdringende Wärmeaustauscher vertikal verlaufen und von oben nach unten durchströmt werden, da dann die Abgase im Gegenstromprinzip abgekühlt werden.

Alternativ hierzu verlaufen die den Warmwasserspeicher durchdringende Wärmeaustauscher horizontal übereinander. Der Wärmeaustauscher, der mit der wasserdampfführenden Abgasleitung verbunden ist, ist dabei unterhalb des Wärmetauscher, der mit der luftführenden Abgasleitung verbunden ist, angeordnet, damit er mit dem kältesten Wasser im Speicher in Berührung kommt.

Um unverbrannten Brennstoff zu nutzen, kann in der wasserdampfführenden Abgasleitung ein Nachbrenner angeordnet sein.

Die Erfindung wird nun anhand der Figuren detailliert erläutert. Hierbei zeigen:

    Figur 1 die eine Variante der erfindungsgemäßen Vorrichtung und

    Figur 2 eine andere Variante, die nicht unter den Schutz des Patentes fällt, jedoch zum Verständnis der Erfindung beiträgt, da sie einen andere Lösung zur Lösung der Aufgabe offenbart.

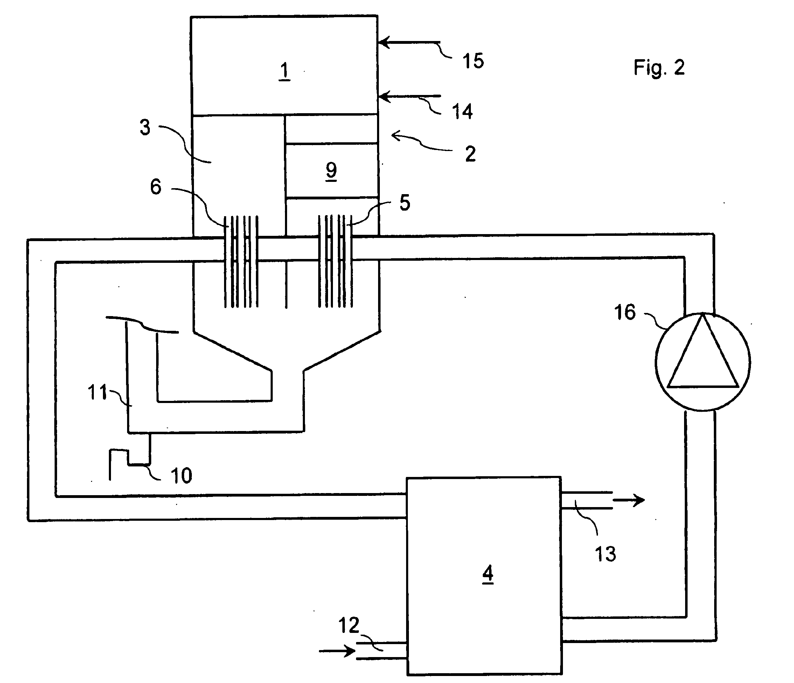

Hierbei sind in den beiden Varianten gleiche Bauteile mit gleichen Bezugsnummern bezeichnet, so dass insbesondere bei der Erläuterung der Figur 2 auf Wiederholungen verzichtet werden kann.

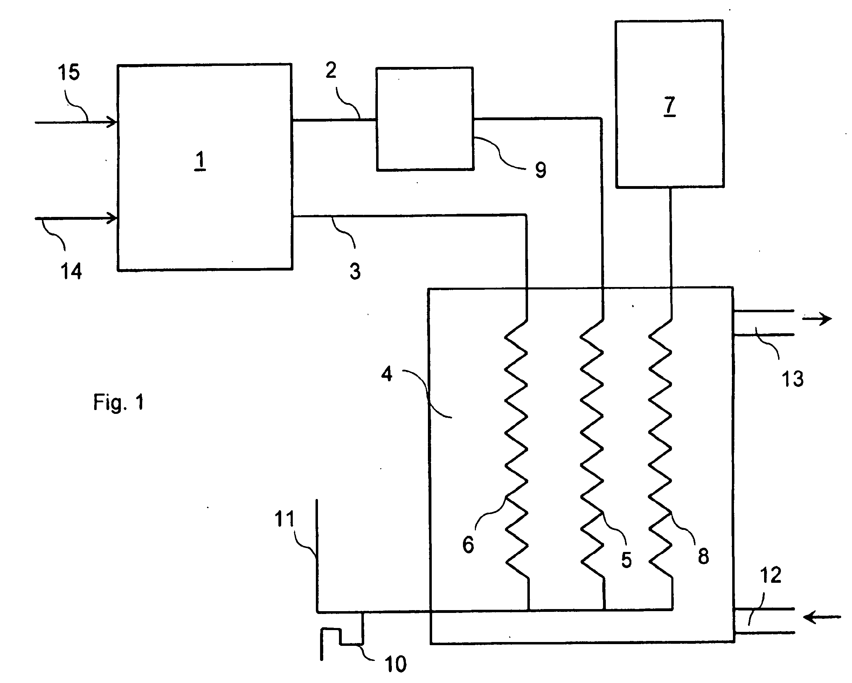

Figur 1 zeigt eine Brennstoffzelle 1 mit Luftzuführung 14 und Brennstoffzuführung 15. Der Brennstoffzuführung 15 kann - nicht dargestellt - ein Reformer zur Erzeugung wasserstoffreichen Prozessgases vorgeschaltet sein. In der Brennstoffzelle 1 findet die elektrochemische Reaktion statt. Im vorliegenden Fall handelt es sich bei der Brennstoffzelle 1 um eine SOFC-Brennstoffzelle; es kann sich jedoch erfindungsgemäß auch um einen anderen Brennstoffzellentyp handeln.

An der Anode läuft die Reaktion $O^{2-} + H_2 \rightarrow H_2O + 2e^-$ und an der Kathode die Reaktion

$$\frac{1}{2}O_2 + 2e^- \rightarrow 2O^{2-} \text{ ab.}$$

ab.

Eine Kathodenabgasleitung 3 führt aus der Brennstoffzelle 1 zu einem Wärmeaustauscher 6 in einem Warmwasserspeicher 4. Der Warmwasserspeicher 4 verfügt über eine Rücklaufleitung 12 im unteren Bereich und eine Vorlaufleitung 13 im oberen Bereich; über diese Leitungen 12, 13 ist der Warmwasserspeicher 4 mit einem nicht weiter dargestellten Heizungskreislauf verbunden.

Aus der Brennstoffzelle 1 führt eine Anodenabgasleitung 2 wasserdampfhaltiges Abgas zu einem Nachbrenner 9, in dem unverbrannter Wasserstoff sowie gegebenenfalls andere unverbrannte Bestandteile verbrannt werden. Zumeist handelt es sich bei dem Nachbrenner 9 um einen katalytischen Nachbrenner 9. Wird zur Nachverbrennung weiterer Sauerstoff benötigt, so kann dieser entweder über eine - nicht dargestellte - Zuführung zum Nachbrenner 9 gelangen. Hierzu kann eine gewisse Menge Kathodenabgas, die der Kathodenabgasleitung 3 entnommen wird, oder Frischluft verwendet werden. Das nachverbrannte Anodenabgas gelangt zu einem Wärmeaustauscher 5 im Warmwasserspeicher 4.

Ein Zusatzheizgerät 7 ist mit einem Wärmeaustauscher 8 im Warmwasserspeicher 4 verbunden.

Die drei Wärmeaustauscher 5, 6, 8 durchdringen den Warmwasserspeicher 4 vertikal und werden von ihren jeweiligen Abgasströmen von oben nach unten durchströmt. Da im Warmwasserspeicher 4 warmes Wasser nach oben und kaltes Wasser nach unten strömt, ist somit gewährleistet, dass die Wärmeaustauscher 5, 6, 8 im Gegenstromprinzip arbeiten und die Abgase möglichst weit abgekühlt werden. Die drei Wärmeaustauscher 5, 6, 8 führen in eine gemeinsame Abgasleitung 11. Über einen Siphon 10, der mit den Wärmeaustauscher 5, 8 verbunden ist, wird Kondensat abgeführt.

Nicht dargestellt ist die Variante, dass die Wärmeaustauscher 5, 6, 8 im Wesentlichen horizontal angeordnet sind, wobei der oder die kondensierend betriebenen Wärmeaustauscher 5, 8 unterhalb des luftführenden Wärmeaustauschers 6 angeordnet sind.

Figur 2 zeigt eine nicht unter den Schutz des Patentes fallende Variante einer Vorrichtung mit einer Brennstoffzelle 1 mit Anodenabgasleitung 2 und Kathodenabgasleitung 3, bei der die Anodenabgasleitung 2 in einen flüssigkeitsgekühlen Wärmeaustauscher 5 und die Kathodenabgasleitung 3 in einen anderen flüssigkeitsgekühlen Wärmeaustauscher 6 geleitet werden. Die beiden abgasseitig parallelen Wärmeaustauscher 5, 6 münden in eine gemeinsame Abgasleitung 11, an welche ein Siphon 10 zum Abführen von Kondensat angeschlossen ist. Die beiden Wärmeaustauscher 5, 6 befinden sich in einem Kreislauf mit einem Warmwasserspeicher 4 und einer Umwälzpumpe 16, wobei sie flüssigkeitsseitig in Reihe geschaltet sind. Der Wärmeaustauscher 5 der wasserdampfführenden Abgasleitung 2 ist in Fliesrichtung des Kreislaufwassers stromauf des anderen Wärmeaustauschers 6 angeordnet, um auf niedrigerem Temperaturniveau mit erhöhter Kondensation arbeiten zu können.

**Patentansprüche**

1. Brennstoffzelle (1) mit Anodenabgasleitung (2) und Kathodenabgasleitung (3) in Verbindung mit einem Warmwasserspeicher (4), **dadurch gekennzeichnet, dass** die Anodenabgasleitung (2) und die Kathodenabgasleitung (3) in zwei separate den Warmwasserspeicher (4) durchdringende Wärmeaustauscher (5, 6) geleitet werden und die Abgase eines Zusatzheizgerätes (7) durch einen dritten, den Warmwasserspeicher (4) durchdringende Wärmeaustauscher (8) geleitet werden.

2. Brennstoffzelle (1) in Verbindung mit einem Warmwasserspeicher (4) nach Anspruch 1, **dadurch gekennzeichnet, dass** die den Warmwasserspeicher (4) durchdringende Wärmeaustauscher (5, 6, 8) vertikal verlaufen und im oberen Bereich des Warmwasserspeichers (4) mit der Brennstoffzelle (1) und dem Zusatzheizgerät (7) verbunden sind.

3. Brennstoffzelle (1) in Verbindung mit einem Warmwasserspeicher (4) nach Anspruch 1, **dadurch gekennzeichnet, dass** die den Warmwasserspeicher (4) durchdringende Wärmeaustauscher (5, 6, 8) horizontal über- beziehungsweise untereinander verlaufen und der Wärmetauscher (5), der bei SOFC-Brennstoffzellen mit der Anodenabgasleitung (2) verbunden ist, unterhalb des Wärmetauscher (6), der mit der anderen Abgasleitung (3) verbunden ist, angeordnet ist.

4. Brennstoffzelle (1) in Verbindung mit einem Warmwasserspeicher (4) nach einem der Ansprüche 1 bis 3, **dadurch gekennzeichnet, dass** bei SOFC-Brennstoffzellen in der Anodenabgasleitung (2) ein Nachbrenner (9) angeordnet ist.

**Claims**

1. Fuel cell (1), having an anode waste gas line (2) and a cathode waste gas line (3), connected to a hot water tank (4), **characterised in that** the anode waste gas line (2) and the cathode waste gas line (3) are guided in two separate heat exchangers (5, 6) penetrating the hot water tank (4) and the waste gases of an additional heating device (7) are guided through a third heat exchanger (8) penetrating the hot water tank (4).

2. Fuel cell (1) connected to a hot water tank (4) according to claim 1, **characterised in that** the heat exchangers (5, 6, 8) penetrating the hot water tank (4) extend vertically and are connected in the upper region of the hot water tank (4) to the fuel cell (1) and to the additional heating device (7).

3. Fuel cell (1) connected to a hot water tank (4) according to claim 1, **characterised in that** the heat exchangers (5, 6, 8) penetrating the hot water tank (4) extend horizontally above and beneath one another and the heat exchanger (5), which is connected to the anode waste gas line (2) in the case of SOFC fuel cells, is arranged beneath the heat exchanger (6), which is connected to the other waste gas line (3).

4. Fuel cell (1) connected to a hot water tank (4) according to one of claims 1 to 3, **characterised in that**, in the case of SOFC fuel cells, a reheater (9) is arranged in the anode waste gas line (2).

**Revendications**

1. Pile à combustible (1), comprenant une conduite de gaz de combustion anode (2) et une conduite de gaz de combustion cathode (3), connectée à un réservoir d'eau chaude (4), **caractérisée en ce que** la conduite de gaz de combustion anode (2) et la conduite de gaz de combustion cathode (3) sont guidées dans deux échangeurs thermiques séparés (5, 6) pénétrant le réservoir d'eau chaude (4) et les gaz de combustion d'un appareil de chauffage supplémentaire (7) sont guidés dans un troisième échangeur thermique (8) pénétrant le réservoir d'eau chaude (4).

2. Pile à combustible (1) connectée à un réservoir d'eau chaude (4) selon la revendication 1, **caractérisée en ce que** les échangeurs thermiques (5, 6, 8) pénétrant le réservoir d'eau chaude (4) s'étendent verticalement et sont connectés dans la région supérieure du réservoir d'eau chaude (4) à la pile à combustible (1) et à l'appareil de chauffage supplémentaire (7).

3. Pile à combustible (1) connectée à un réservoir d'eau chaude (4) selon la revendication 1, **caractérisée en ce que** les échangeurs de chaleur (5, 6, 8) pénétrant le réservoir d'eau chaude (4) s'étendent horizontalement au-dessus et en-dessous l'un de l'autre et l'échangeur de chaleur (5), qui est connecté à la conduite de gaz de combustion anode (2) dans le cas des piles à combustible SOFC, est agencé sous l'échangeur thermique (6), qui est connecté à l'autre conduite de gaz de combustion cathode (3).

4. Pile à combustible (1) connectée à un réservoir d'eau chaude (4) selon l'une des revendications 1 à 3, **caractérisée en ce que**, dans le cas des piles à combustible SOFC, un resurchauffeur (9) est agencé dans la conduite de gaz de combustion anode (2).

Fig. 1

15

14

1

2

9

7

3

4

6    5    8

11

10

13

12

EP 2 026 397 B1

5

Fig. 2

**EP 2 026 397 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005069741 A1